(19) Europäisches Patentamt
European Patent Office
Office européen des brevets

(11) **EP 4 050 510 A1**

(12) **EUROPEAN PATENT APPLICATION**

(43) Date of publication:
**31.08.2022 Bulletin 2022/35**

(21) Application number: **21159415.5**

(22) Date of filing: **25.02.2021**

(51) International Patent Classification (IPC):
**G06K 9/00** *(2022.01)* **G06K 9/62** *(2022.01)*
**G06T 7/20** *(2017.01)*

(52) Cooperative Patent Classification (CPC):
**G06K 9/6271; G06K 9/6288; G06T 7/20;
G06V 20/56**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA
TOYOTA-SHI, AICHI-KEN 471-8571 (JP)**
• **ETH Zurich - The Swiss Federal Institute of
Technology Zurich
8092 Zurich (CH)**

(72) Inventors:
• **ABBELOOS, Wim
1140 BRUSSELS (BE)**
• **ZÄCH, Jan-Nico
8092 ZURICH (CH)**
• **DAI, Dengxin
8092 ZURICH (CH)**
• **LINIGER, Alexander Daniel
8092 ZURICH (CH)**
• **VAN GOOL, Luc
8092 ZURICH (CH)**

(74) Representative: **Cabinet Beau de Loménie
158, rue de l'Université
75340 Paris Cedex 07 (FR)**

(54) **OBJECT INFORMATION CALCULATION METHOD AND SYSTEM**

(57) An object information calculation method or system for obtaining object information relative to object(s).

A graph (G) is a data structure comprising detection nodes ($V_{D,i}$), track nodes ($V_{T,k}$), detection edges ($E_{DD,ij}$) and track edges ($E_{TD,km}$).

The method comprises performing iteratively:
S30) acquiring detection(s) (DET) of object(s) so as to prepare base vectors (x);
S40) determining embedded features ($e_{D,i}$, $e_{T,m}$, $e_{DD,ij}$, $e_{TD,mk}$) of the object(s) for nodes and edges of the graph (G);
S50) determining initial values ($h^{(0)}_{D,i}$, $h^{(0)}_{T,m}$, $h^{(0)}_{DD,ij}$, $h^{(0)}_{TD,mk}$) of the nodes and edges of the graph (G);
S60) updating one or more time (i=1...L) at least track edge(s) ($h^{(s)}_{TD,mk}$) of the graph (G);
S70) assessing a reliability of edge(s) and/or node(s),
S80) updating track(s);
S90) generating new track(s);
S100) updating track node(s);
S110) assessing whether a stop criterion has been fulfilled, and when the stop criterion has been fulfilled:
S120) outputting object information relative to the object(s).

**FIG.13**

| | |
|---|---|
| S10 | Reception of raw data from one or more detection modalities |
| S20 | Detections calculation |
| S30 | Input data preparation |
| S40 | Embedding of features of the detected object(s) for the nodes and edges of the graph G, using the embedding neural networks $EN_D$, $EN_T$, $EN_{DD}$, $EN_{TD}$ |
| S50 | Determination of initial values $h^{(0)}_{D,i}$, $h^{(0)}_{T,k}$, $h^{(0)}_{DD,ij}$, $h^{(0)}_{TD,ki}$ of nodes and edges of graph G, using the initialization neural networks $IN_D$, $IN_T$, $IN_{DD}$, $IN_{TD}$ |

Information propagation (Neural message passing)
S62 — Update of the track edges
S64 — Update of the detection edges
S66 — Update of the detection nodes
S68 — Update of the track nodes

Reliability assessment and classification
S72 — Assessing reliability of edges and/or nodes
S74 — Determining active nodes and edges (sets $A_D$, $A_T$, $A_{DD}$, $A_{TD}$)

| | |
|---|---|
| S80 | Tracks update |
| S90 | New track(s) generation |
| S100 | Track nodes update |
| S110 | Stop criterion evaluation |
| S120 | Output of object information |

**Description**

FIELD OF THE DISCLOSURE

The present disclosure concerns the simultaneous, real-time tracking of multiple objects in a scene. Tracking objects is of particular importance for controlling the motion of vehicles and robots, in order to adapt the motion of the vehicle or robot to the presence and behaviour of the objects present in the scene (e.g. pedestrians, cyclists, cars or trucks moving around a vehicle, etc.).

BACKGROUND OF THE DISCLOSURE

In order to adequately control the motion of a robot or a vehicle (in particualr an autonomous vehicle), the detection of the objects around the vehicle is a major task of the control system.

The detection of objects has first been made based on the output of individual sensors. For instance, objects have been detected in an image of the camera. This method was then improved by associating detected objects across successive frames of the camera, the resulting method being called 'tracking by detection'.

In more recent approaches, graphs have been used to describe the objects in a 2D-scene for instance as proposed by document reference 1 below. In the method proposed by this documetn, a graph neural network operating on a graph performs neural message passing in order to obtain more reliable information on the positions of objects identified in the scene.

However, this method is limited to a 2D-scene, and still has limited performances for obtaining highly reliable information regarding the positions of objects identified in the scene, and in particular the trajectories of these different objects.

Consequently, there is still a need for methods and systems capable of obtaining highly reliable information about the positions and preferably the trajectories of objects in a scene, in particular in 3D.

Reference:

[1] Guillem Braso and Laura Leal-Taixe. Learning a Neural Solver for Multiple Object Tracking. In 2020 IEEE/CVF Conference on Computer Vision and Pattern Recognition (CVPR), pages 6246-6256, Seattle, WA, USA, June 2020. IEEE.

DISCLOSURE OF THE INVENTION

In order to address the above-described problems of the known methods used for obtaining object information about objects present in a scene, the following computer-implemented method is proposed. This method is an object information calculation method for obtaining confirmed object information relative to object(s) on the basis of a plurality of detections (DET) of the object(s).

Beforehand, the following terms and expressions are defined.

A detection of an object is a datum comprising a position of the object at a time point. The detection can include additional information, e.g. a velocity, an orientation, a size of the object, etc.

A track is a datum including one or more detection(s). In some cases, a track may include several detections for the same time point.

A track node is a datum calculated from a track at a time point or relative to that time point.

A detection node is a datum calculated from a detection.

A track edge is a datum associating, at a time point, a track node to a detection node.

A detection edge is a datum associating two detection nodes at two different time points.

A graph is a data structure comprising a plurality of detection nodes, a plurality of track nodes, a plurality of detection edges and a plurality of track edges.

The proposed object information calculation method comprises performing iteratively the following steps S30-S100, and then performing step S120:

S30) acquiring at least detection(s) of object(s);
S40) based on the received detection(s) and, when track(s) have been calculated or acquired, on the track(s), determining embedded features of the object(s) for nodes and edges of the graph;
S50) determining initial values of the nodes and edges of the graph (G) for which embedded features have been determined, based on the embedded features;

S60) in response to receipt of the initial values, updating one or more time at least track edge(s) of the graph;

S70) based on updated values of the detection nodes, the track nodes, the detection edges and/or the track edges of the graph, assessing a reliability of at least one of the edges and/or nodes,

S80) updating track(s), wherein a track is updated by assigning a detection node to the track;

S90) generating new track(s), a new track being generated based on at least one detection or detection node;

S100) updating track node(s), at least by generating new track node(s) from track(s);

S110) assessing whether a stop criterion has been reached; and,

when it has been assessed at step S110 that the stop criterion has been reached, performing step S120:

S120) outputting object information relative to at least one of the object(s), based on at least one edge or node or track.

In the above method, at step S60, at least part of the track edges, and usually all the edges and nodes of the graph are updated.

Then, at step 70, the reliability of at least one of the edges and nodes of the graph is assessed. The nodes and edges whose reliability is assessed may be different from the nodes and edges which have been updated at step S70 (although in most embodiments, all nodes and edges are updated at step S60).

When the method is executed, in particular at steps S80 and S90, detection node(s) are assigned to the tracks (which means that the assigned detection node is associated with the track, and that the detection corresponding to the assigned detection node is also associated with the track).

In the above method, an iteration of the method consists in executing steps S30-S110.

In the present document:

- Assessing the reliability of a variable means calculating a value (usually in the range [0-1]) which represents an estimated reliability of the variable.
- When a noun is written followed by '(s), it means that the considered object or item can be in the singular or plural form. For instance, the expression 'object(s)' means 'at least one object'. Accordingly, a sentence like 'Object(s) are present' includes the singular form, that is, it encompasses the case where a single object is present.
- a function 'based on a value' or 'calculated from a value' means that at least said value is used to calculate the output of the function (the output of the function is often also a function of other values).

It should be noted that since there may be false positive detections, part of the detections, and consequently, part of the nodes and edges usually correspond to false detections. Accordingly, part of the role of the method or system of the present disclosure is to distinguish the true detections from the false detections.

In some embodiments, at step S100, updating track node(s) comprises generating new track nodes with predictive tracker(s). A predictive tracker is herein a functional unit configured to determine a track node at the next time point based on at least a track node for the current time point.

In some variants of the above embodiments, a predictive tracker is defined for each track, and/or the predictive tracker(s) include a Kalman filter and/or include neural network(s) comprising one or more LSTM cells.

In some embodiments, at step S80, updating a track comprises identifying a connectivity set of the track, the connectivity set being a set of active detection edges that are connected through an active track edge to one of the track nodes of the considered track, an active detection edge or track edge being a detection edge or track edge whose reliability is above a predetermined threshold.

In some embodiments, at step S60 updating at least the track edges is performed using a message passing algorithm, in which updated nodes are updated based on adjacent edges, and updated edges are updated based on nodes that they connect.

In some embodiments, at step S60 updating at least the track edges is performed using at least one neural network.

In some embodiments, at step S50, the initial features are further determined based on values of nodes and edges of the graph calculated during a previous execution of the method.

In some embodiments, the detection nodes comprise at least two categories of detection nodes, calculated from detections obtained with at least two different types of sensors. Of course, detections obtained from different sensors may correspond to the same object.

In some embodiments, step S80 comprises assigning at least two detection nodes pertaining to at least two different categories to one track node. Advantageously in this case, for one or more track nodes, the information output at step S120 may comprise information about a plurality of detection nodes of different categories assigned to said one or more track nodes.

In some embodiments, the detection nodes comprise at least two categories of detection nodes, calculated from detections acquired with at least two different types of sensors;

the graph further comprises multi-modal edges, a multi-modal edge being a datum associating two detection nodes from different categories;

during the reliability assessment step S70, a reliability of multi-modal edge(s) is assessed; and

the information output at step S120 is determined based on an assessed reliability of multi-modal edge(s).

In some embodiments, at step S40, the embedded features of the detected object(s) are determined using at least one embedding neural network or a linear transformation.

In some embodiments, at step S30, track(s) are acquired.

In some embodiments, each of a track node and a detection node comprises at least a position ($p_i$), a size ($a_i$) and an orientation ($r_i$) of an object.

In some embodiments, at step S80, a track is updated by assigning a considered detection node to the track based at least on the reliability of a track edge connecting the considered detection node to a track node calculated from the track.

The information obtained with the above-defined method can be used for different purposes, for instance, for driving a vehicle, for controlling the motion of the arms of a robot, etc.

Consequently, the present disclosure further includes a computer-implemented motion control method for controlling a motion of a vehicle or a robot, the method comprising iteratively:

    A) calculating object information by an object information calculation method as defined above;

    B) calculating control(s) of the vehicle or the robot, based on the calculated object information; and

    C) transmitting the calculated value(s) of the control(s) to actuator(s) of the vehicle or robot.

In a particular implementation, the proposed method is determined by computer program instructions.

Accordingly, another purpose the present disclosure is to propose one or more computer program(s) comprising instructions which, when the instructions are executed by a computer, cause the computer to carry out the steps of one of the above-defined object information calculation methods, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more above-defined computer program(s) stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes an object information calculation system for obtaining confirmed object information relative to object(s) on the basis of a plurality of detections of the object(s); the object information calculation system comprising one or more processors and a computer-readable medium;

the computer-readable medium comprising computer instructions stored therein, wherein the instructions, when executed by the one or more processors, cause the one or more processors to carry out the steps of one of the above-defined object information calculation methods.

The present disclosure also includes an advanced motion control system, comprising one or more processors and a computer-readable medium; the computer-readable medium comprising computer instructions stored therein, wherein the instructions, when executed by the one or more processors, cause the one or more processors to carry out the steps of the above-defined motion control method.

The present disclosure also includes a vehicle or robot comprising an object information calculation system as defined above or an advanced motion control system as defined above. The vehicle or robot can be any type of vehicle or robot (ground, air, space, sea, submarine vehicle/robot, etc.). The vehicle may be manned or unmanned.

## BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which:

    Fig.1 is a schematic representation in perspective of a vehicle equipped with an object information calculation system configured to implement a first object information calculation method according to the present disclosure;

    Fig.2 is a schematic representation of a graph used in the first object information calculation method;

Fig.3 is a schematic functional representation of the object information calculation system mounted in the vehicle of Fig.1;

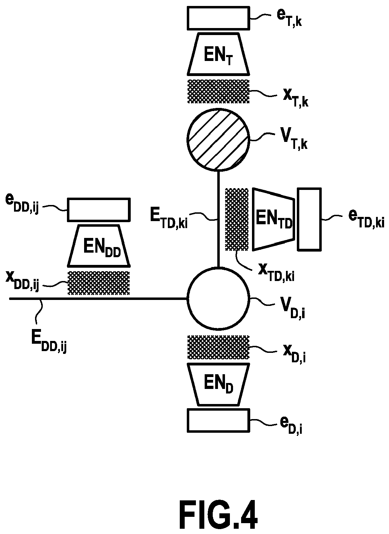

Fig.4 is a schematic representation of neural networks performing embedded features determination, in the first object information calculation method;

Fig.5 is a schematic representation of a neural network updating a detection edge, during a neural message passing stage of the first object information calculation method;

Fig.6 is a schematic representation of a neural network updating a track edge, during the neural message passing stage of the first object information calculation method;

Fig.7 is a schematic representation of a first sub-step of a step of updating a detection node (illustrated by Fig.8), during the neural message passing stage of the first object information calculation method;

Fig.8 is a schematic representation of the step of updating a detection node, during the neural message passing stage of the first object information calculation method;

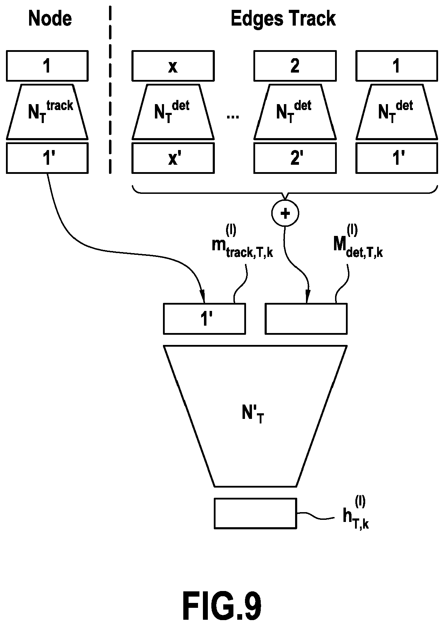

Fig.9 is a schematic representation of a neural network updating a track node, during the neural message passing stage of the first object information calculation method;

Fig.10 is a schematic representation of a graph of the object information calculation system, in a second object information calculation method according to the present disclosure;

Fig.11 is a schematic representation of a graph of the object information calculation system, in a third object information calculation method according to the present disclosure;

Fig.12 is a schematic representation of a graph of the object information calculation system, in a fourth object information calculation method according to the present disclosure;

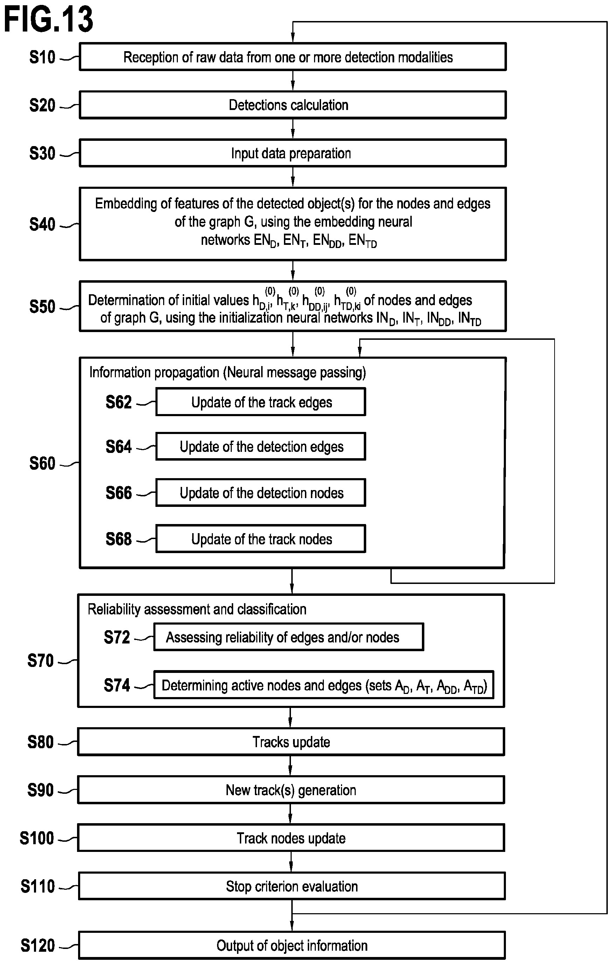

Fig.13 is a block diagram representing the steps of the first method according to the present disclosure; and

Fig.14 is a block diagram representing the steps of a method for performing a motion control task for controlling a motion of a vehicle or robot according to the present disclosure.

## DESCRIPTION OF PREFERRED EMBODIMENTS

An advanced motion control system AMCS (hereafter, 'AMCS') comprising an object information calculation system OICS according to the present disclosure will now be presented.

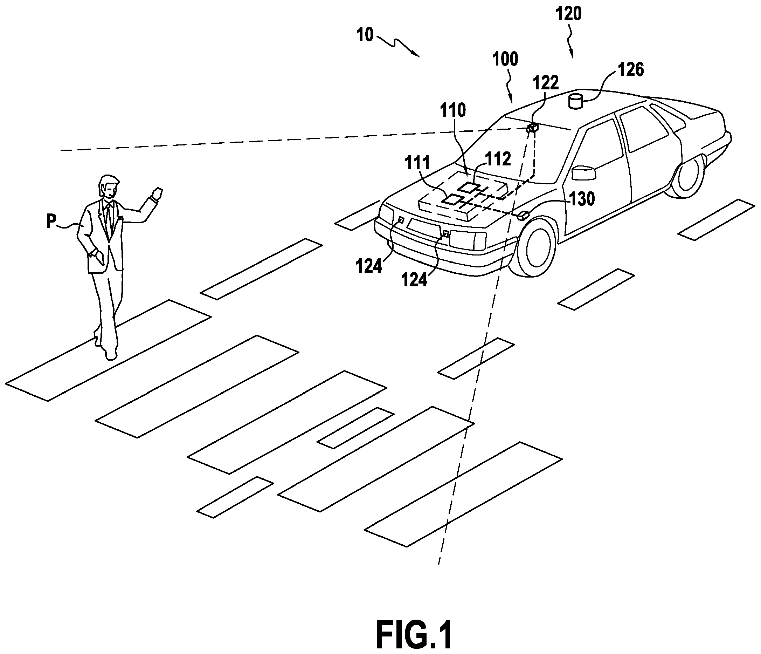

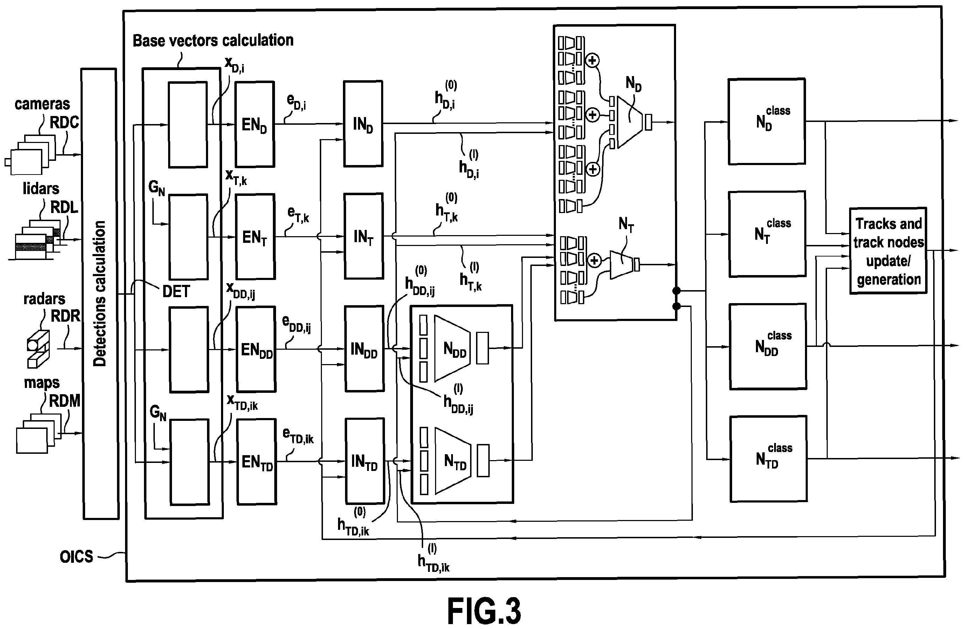

The structure of the AMCS system 100 is illustrated by Fig.1, while its functional units are illustrated by Fig.3. On these figures, AMCS is presented in operation, mounted on a vehicle 1. The vehicle 1 is a car, which represents a non-limiting example of a vehicle on which a system according to the present disclosure can be mounted. Although the present invention is disclosed implemented on a vehicle, it can also be implemented in a robot.

## GENERAL ARCHITECTURE OF THE AMCS SYSTEM

### Material architecture

The vehicle 10 includes the advanced motion control system AMCS 100.

The AMCS system 100 comprises a central driving computer 110 ('computer 110'), a set of sensors 120, each sensor being connected to computer 110, a set of actuators 130, and various other components.

Most components of the AMCS system are shared components, which are used to perform multiple tasks. That is, the components of the AMCS system perform the functions of the AMCS system, but may also perform other functions in vehicle 1.

The AMCS system includes in particular, as mentioned above, an object information calculation system OICS according to the present disclosure, which is essentially constituted by the computer 110.

The AMCS is configured to calculate controls of the vehicle, based on the calculated confirmed object information calculated by the object information calculation system OICS, and to transmit the calculated value of the control to actuator(s) of the vehicle 10.

Although computer 110 is represented on Fig.1 in a single box, it may comprise one or more processors, and can therefore be a distributed calculation system, distributed over a plurality of processors, possibly physically arranged on different locations.

The set of sensors 120 comprises in particular sensors configured to perceive an external environment of car 1. In this purpose, it comprises cameras 122, radars 124 and lidars 126. One of these sensors 120, only a front camera 122, two front radars 124 and a roof-mounted lidar 126 are represented on Fig.1.

The raw data outputted by the sensors 120 are transmitted in real time to computer 110. Note, even if the expression 'raw data' is used herein, the raw data may actually be pre-processed data, having been submitted to any pre-processing. For instance, 'raw' images outputted by the camera may be images which have been submitted to a pre-processing such as contrast enhancement, etc.

The set of actuators 130 comprises in particular a steering unit (also referenced 130), which can apply torque to a steering column of vehicle 10 so as to steer vehicle 10, a braking unit (not shown on Fig.1), etc.

The functions (the functional units) of the AMCS system, and in particular of the OICS system, are implemented on the computer 110.

Computer 110 comprises a non-transitory storage medium 111 and one or more processor(s) 112.

The computer 110, in particular in its storage medium 111, stores instructions which when executed by the one or more processor(s) 112 cause the one or more processor(s) 112 to implement the different functional units or functions of the AMCS system, and in particular of the OICS system.

The one or more processors 112 are intended to be representative of the presence of any one or more processors or processing devices, of any of a variety of forms.

A computer program P1 to perform motion control tasks for controlling the motion of vehicle 10, which includes in particular a sub-program P11 to calculate object information according to the present disclosure, is stored in storage medium 111. These programs, and the storage medium 111, are examples respectively of a computer program and a computer-readable recording medium pursuant to the present disclosure.

The memory 111 of the computer 110 indeed constitutes a recording medium according to the invention, readable by the one or more processor(s) 112 and on which said program is recorded.

Functional architecture

The AMCS system 100 comprises a central driving unit and the OICS system. The central driving unit issues the main motion controls of the vehicle (in the present case, the main driving controls), in particular to control steering, acceleration and/or braking, etc. The central driving unit may be capable of performing autonomous driving of the vehicle, at any level from 2 to 5 according to SAE norm J3016-2018. The OICS system is one of the main auxiliary systems of the AMCS system. In this purpose, it calculates confirmed object information about the objects surrounding vehicle 10.

Based on this information, the central driving unit calculates the appropriate controls for driving the vehicle. It transmits these controls to the respective actuators of vehicle 10 to drive the vehicle.

The central driving unit as well as the OICS system are configured to execute programs (in particular programs P1 and P11,) iteratively at successive loops indexed by an index i. The successive loops i are executed at successive time points ti (i=1.... i=k).

THE GRAPH G AND THE GRAPH NEURAL NETWORK

The method of the present disclosure is implemented by a complex network which comprises several neural networks, which themselves in some cases comprise specialized neural networks.

The most important one of these neural networks is a graph neural network which operates on a graph G (Fig.3).

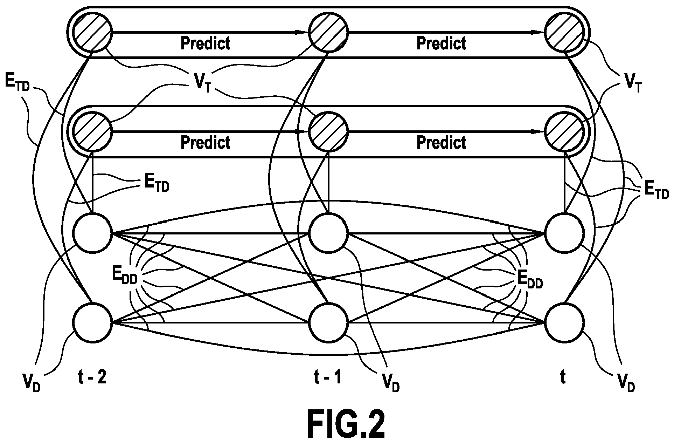

The graph G comprises two types of nodes: detection nodes $V_D$ and track nodes $V_T$, and two types of edges, detection edges and track edges (Fig.2). For each type of edge or node, sub-types (or classes) may be defined, to create a higher diversity of entities within the graph.

Symbols with subscript $_D$ belong to detection nodes and symbols with subscript $_T$ to track nodes. Symbols with subscript $_{DD}$ belong to detection edges and symbols with subscript $_{TD}$ to track edges.

Nodes are indexed with integer numbers from the set I for detection nodes and from K for track nodes. Edges are referred to by the indices of the connected nodes, i.e., $E_{TD,ki}$ describes a track edge from $V_{T,k}$ to $V_{D,i}$. Hereinafter, the same index variables, more precisely the index variables i, j, m, n (of set I) are used to refer to detection node indices and index variables k, p, q (of set K) refer to track node indices. While steps S10-S110 of the method are iteratively executed, the current (latest) timepoint is denoted as t and the time point of a specific node for a time point at an iteration i is referred to as ti. Finally, tracks are indexed with track IDs n.

A few examples of tracks are shown schematically on Fig.2.

The features of the edges and nodes of the graph have no explicit meaning. These features are derived (at least initially) from base vectors x.

These base vectors x comprise the values of the variables which are considered relevant for the edges or nodes, or the types or groups of edges or nodes, for which they are calculated.

A base vector may for instance include a variable indicating a class of objects to which the object associated with the detection belongs.

The classes of objects are defined depending of the context. In this embodiment, the method is used to detect objects around a vehicle. Consequently, the object classes for instance may be trucks/buses, cars, motorbikes, bicycles, pedestrians, etc.

The base vectors $x_{T,k}$ from which the track nodes can be derived may comprise different variables. In the embodiment presented herein, a base vector $x_{T,k}$ from which a track node $V_{T,k}$ can be derived is defined as:

$$x_{T,k} = (pk, ak, rk, ck)$$

where pk is the position, ak is the size, rk is the orientation and ck is the class (or type) of the object (whose trajectory passes at the position pk the track node).

More generally, a base vector $x_{T,k}$ for a track node may include additional features or fewer features.

A track edge is defined as a connection between a track node $V_{T,k}$ and a detection node $V_{D,i}$ at the same timestep tk = ti.

In the present embodiment, a base vector $X_{TD,ki}$ from which a track edge $E_{TD,ki}$ can be derived is defined as:

$$x_{TD,ki} = (\Delta p_{ki}, \Delta a_{ki}, \Delta r_{ki})$$

where the three entries are the differences in position, size and rotation respectively between the two nodes connected by the track edge. A track edge may include additional features or fewer features.

In the present embodiment, a base vector $x_{D,i}$ from which a detection node $V_{D,i}$ can be derived is defined as:

$$x_{D,i} = (p_i, a_i, v_i, r_i, c_i, d_i, q_i)$$

where pi is the position, ai is the size, vi is the velocity, ri is the orientation, ci is the object class (or type), di is the detection score, gi is the distance of the detected object relative to the vehicle. A detection node may include additional features or fewer features.

In the present embodiment, a detection edge is an edge between a pair of detection nodes $V_{D,i}$ and $V_{D,j}$ at two timesteps $t_i$ and $t_j$ different from each other.

In the present embodiment, a base vector $x_{DD,ij}$ from which a detection edge $E_{DD,ij}$ can be derived is defined as:

$$x_{DD,ij} = (\Delta t_{ij}, \Delta p_{ij}, \Delta a_{ij}, \Delta r_{ij}, \Delta p'_{ij}, \Delta p'_{ji})$$

where $\Delta t\,ij = t_i - t_j$ is the frame time difference, $\Delta p\,ij = p_i - p_j$ the position difference, $\Delta a\,ij = a_i - a_j$ the size difference, and $\Delta r\,ij = r_i - r_j$ the rotation difference, between the two detection nodes $V_{D,i}$ and $V_{D,j}$. The last two elements are the differences in the predicted position using a constant velocity assumption, defined by :

$$\Delta p'_{ij} = p_i - ((t_i - t_j)v_j + p_j)$$

In addition, the graph G is designed to take into account a predetermined number of time steps. For instance, in the present embodiment, nodes and edges are created for three time points t-2, t-1 and t.

Moreover, for each time step, a certain number of detection nodes and track nodes are created in the graph. This number is proportional to the maximum number of objects that the OICS system will be able to track at the same time around the vehicle. At each iteration of the method, this number may be changed so as to take into acccount the actual number of objects which have been detected around the vehicle during the previous iteration(s) of the method.

The size of the graph (in particular, the number of nodes and edges) may further be adapted based on other information, e.g. when approaching an intersection, etc.

In some embodiments, a detection edge is created between all pairs of detection nodes (of course, subject to the condition that they be not at the same time point).

However, in other embodiments, the number of detection edges may be limited. For instance, to reduce the connectivity of graph G, detection edges may be established between detection nodes only of objects of the same class, and/or when the distance between the two detection nodes is less than a threshold (optionally, a specific threshold for each class of objects).

In some embodiments, several types or categories of detection nodes, detection edges, track nodes, and/or track edges may be defined. For instance (it will be described with more details below), if the detection data are produced by different sensors, for instance by cameras, by lidars, etc., a first category of detection nodes and edges can group the nodes and edges calculated from detections obtained with or derived from camera data, while a second category of detection nodes and edges can group the nodes and edges calculated from detections obtained with or derived from lidar data.

In this latter case, somes rules may be used when creating the graph, based on the types of edges and/or nodes. For instance, the creation of edges between nodes of different types may be prohibited.

In addition, neural network(s) (which are presented in detail below) are configured to operate on graph G so as to perform a 'neural message passing' function. These neural network(s) constitute together a graph neural network which operates on graph G by exchanging messages between the nodes and edges of the graph.

At each iteration of the method, the graph neural network inputs the current values of the graph G, and outputs messages to the nodes and edges of graph G which update the values of the graph.

By passing these messages, the information present in the respective nodes and edges is propagated throughout the graph.

The neural network(s) of the graph neural network may be for instance multi-layer perceptron(s).

EXEMPLARY IMPLEMENTATIONS OF THE METHOD

Exemplary implementations of methods according to the present disclosure will now be described.

Each of these methods is executed iteratively, by performing steps S10-S110 one or more times during successive loop(s).

At each new iteration, a loop index is incremented at successive time points t-2, t-1, t,...

When a stop criterion is reached at step S110 (as explained below), the loops are terminated, and the confirmed object information calculated thanks to the method is output.

S10) Raw data acquisition

In a first step S10, raw data are acquired.

The raw data may be data outputted by the sensors of the AMCS, such as raw data RDC outputted by cameras 122 (e.g. camera images), raw data RDR outputted by radars 124, or raw data RDL outputted by lidars 126 (e.g. cloud points) of vehicle 10 (Fig.2), etc. Raw data may also be received from other vehicles (V2V) and/or from stationary sensor(s) (V2I).

The raw data may also include raw data RDM retrieved from existing database(s), for instance a map or GIS (Geographic Information System). In this case for instance, the data retrieved from the map or the GIS is data which comprises information relative to objects present in the vicinity of the vehicle.

By acquiring such data, the system makes it possible advantageously to associate the objects detected by the sensors 120 of the vehicle with the objects listed in the map or the GIS.

S20) Detections calculation

In step S20, on the basis of the received raw data RDC, RDR, RDL and RDM, detections DET are generated. Each detection DET is a datum comprising a position $p_i$ of an object at a time point. Therefore, each detection is associated with an object present in the vicinity of the system at the time point of the detection.

In some embodiments, the raw data coming from several sensor(s) and/or database(s) are aggregated (data fusion is performed) in order to calculate the detections.

In other embodiments, the raw data coming from several sensor(s) and/or database(s) are not aggregated. Separate detections are generated for the different sensors and databases, which makes it possible to optimize the present method.

Depending on the implementation, the detections may include different variables, of different types.

A detection may include in particular one or more images, for instance a sub-image of an image acquired by a camera, representing a detected object.

A detection can also include numerical values; for instance, with respect to an object of index i, its position $p_i$, its size $a_i$, its velocity $v_i$, its orientation $r_i$, its type (or class) $c_i$, its detection score $d_i$, and/or the distance $q_i$ between the detected object and the vehicle. The detection can further include the 2D-coordinates of a 2D-bounding box of the above-mentioned sub-image of the object, the 3D coordinates of the detected object relative to the vehicle, etc.

For instance, in the present embodiment, at the time point illustrated by Fig.1, one or more detection(s) certainly comprise an estimated value of the position of the pedestrian P crossing the road in front of vehicle 10 at the considered time point.

These detection(s) can comprise for instance the position and velocity of the pedestrian, and these detection(s) can identify the detected object as belonging to the 'pedestrian' class.

S30) Input data preparation

At step S30, the detection(s) DET are acquired by the object information calculation system OICS.

In addition, if tracks $G_N$ representing trajectories of objects surrounding the vehicle 10 are available (because they have been calculated by another system, or because they have been outputted by executing the method at the previous time point), these tracks may be acquired.

Then, based on the acquired detections and, as the case may be, the acquired tracks, the base vectors are calculated. In the present embodiment, the base vectors $x_{D,i}$, $x_{T,k}$, $x_{DD,ij}$, $x_{TD,ki}$ are calculated, using the formulas cited above. In some embodiments, the base vector for detection nodes may for instance be equal to the corresponding detection.

S40) Features embedding

The base vectors $x_{D,i}$, $x_{T,k}$, $x_{DD,ij}$, $x_{TD,ki}$ are then transmitted to the embedding network(s). In the present embodiment, they are transmitted to four neural networks $EN_D$, $EN_T$, $EN_{DD}$, $EN_{TD}$.

Various types and numbers of neural networks can be used to embed the acquired detections, so as to obtain feature vectors that can be efficiently processed by the graph neural network.

In some embodiments, a single neural network may be used. In the present embodiment, the detections DET are embedded by four separate neural networks $EN_D$, $EN_T$, $EN_{DD}$, $EN_{TD}$. It is also possible to use a distinct neural network for each class of node or edge. The neural network(s) used for this embedding step can be multi-layer perceptrons (MLP). This is the case for networks $EN_D$, $EN_T$, $EN_{DE}$, $EN_{TE}$. Each of them is configured to output a 128 dimensional feature.

Based on the base vectors $x_{D,i}$, $x_{T,k}$, $x_{DD,ij}$, $x_{TD,ki}$, the embedding network(s) $EN_D$, $EN_T$, $EN_{DD}$, $EN_{TD}$ calculate respectively features $e_{D,i}$, $e_{T,i}$, $e_{DD,ij}$, $e_{TD,ki}$ which are called embedded features.

S50) Graph initialization

The embedded features $e_{D,i}$, $e_{T,i}$, $e_{DD,ij}$, $e_{TD,ki}$ are used at the first iteration of the method (i=0). During this first iteration, they are used as initialization value: During this first iteration, the initialization values $h_{D,i}^{(0)}$, $h_{T,i}^{(0)}$, $h_{DD,ij}^{(0)}$ and $h_{TD,ki}^{(0)}$ for the graph G are equal to the embedded features $e_{D,i}$, $e_{T,i}$, $e_{DD,ij}$, $e_{TD,ki}$.

However, in preferred embodiments of the method, in all subsequent iterations of the method, the values $h_{D,i}^{(L)}$, $h_{T,i}^{(L)}$, $h_{DD,ij}^{(L)}$, $h_{TD,ki}^{(L)}$ of the nodes and edges of graph G obtained at the end (iteration I=L) of the execution of the present method for the previous time step t-1 are available at the next time step t.

In this case, each of the initial values $h_{D,i}^{(0)}$, $h_{T,i}^{(0)}$, $h_{DD,ij}^{(0)}$ and $h_{TD,ki}^{(0)}$ of the nodes and edges of graph G, for a time step t is obtained based on two values:

- the value (respectively: $h_{D,i}^{(L)}$, $h_{T,i}^{(L)}$, $h_{DD,ij}^{(L)}$ or $h_{TD,ki}^{(L)}$) of the considered node or edge, obtained at the end of the execution of the present method for the previous time step t-1, and
- the embedded feature ($e_{D,i}$, $e_{T,k}$, $e_{DD,ij}$, $e_{TD,ki}$) for the considered node or edge, calculated at step S40 of the current iteration (and output by one of the four neural networks $EN_D$, $EN_T$, $EN_{DD}$, $EN_{TD}$).

In the present embodiment, the two above values are inputted to an initialization neural network; the output of the initialization neural network constitutes the seed or initial value for the considered node or edge.

More specifically, in the present embodiment four initialization neural networks $IN_D$, $IN_T$, $IN_{DD}$ and $IN_{TD}$ are used to initialize the values respectively of the detection nodes, track nodes, detection edges and the track edges.

The initialization neural network(s) can for instance be multi-layer perceptron(s) (MLPs).

In some embodiments, a distinct initialization neural network can be used for each class of objects.

The feature vector(s) output by the initialization neural network(s) (in the present embodiment, by the networks $IN_D$, $IN_T$, $IN_{DD}$ and $IN_{TD}$) are the initial values $h_{D,i}^{(0)}$, $h_{T,i}^{(0)}$, $h_{DD,ij}^{(0)}$ and $h_{TD,ki}^{(0)}$ for the detection nodes, track nodes, track edges and detection edges of graph G.

S60) Information propagation

The information included in these initial values is then propagated throughout the graph, in one or more iterations. The iterations are indexed by an index I which is incremented at each iteration.

At each iteration, the same information propagation steps are performed.

Now, in some embodiments, it is also possible to use different neural networks for different iterations of the information propagation step.

Such propagation can be performed for instance using a message passing method. However, more generally, any method that distributes information throughout a graph may be used. For instance, the detection information can be propagated or distributed using graph convolutional networks, graph neural networks, Gated Graph Sequence Neural Networks, etc. The information of the graph can be propagated or distributed with a method combining a hand-coded (or explicit) step(s) with learning-based step(s) (as long as the propagation method is differentiable).

Importantly, propagating the information on all types of edges and nodes is not necessary. For instance, in some embodiments, the information is propagated only by updating the values of the track edges. However, in other embodiments, the detection nodes are updated as well as the track edges, so as to obtain more reliable information. Even more preferably, as in the present embodiment, all types of nodes and edges are updated during the information propagation step S60.

During step S60, the nodes and edges may be updated in different orders.

In some embodiments, all types of nodes and edges are updated in parallel.

In other embodiments, and in particular in the embodiment presented herein, the information is propagated in two steps: First, the detection edges and track edges are updated (steps S61 and S62, executed in parallel); then, the detection nodes and track nodes are updated (steps S33 and S64, executed in parallel).

S62 - Detection edge update

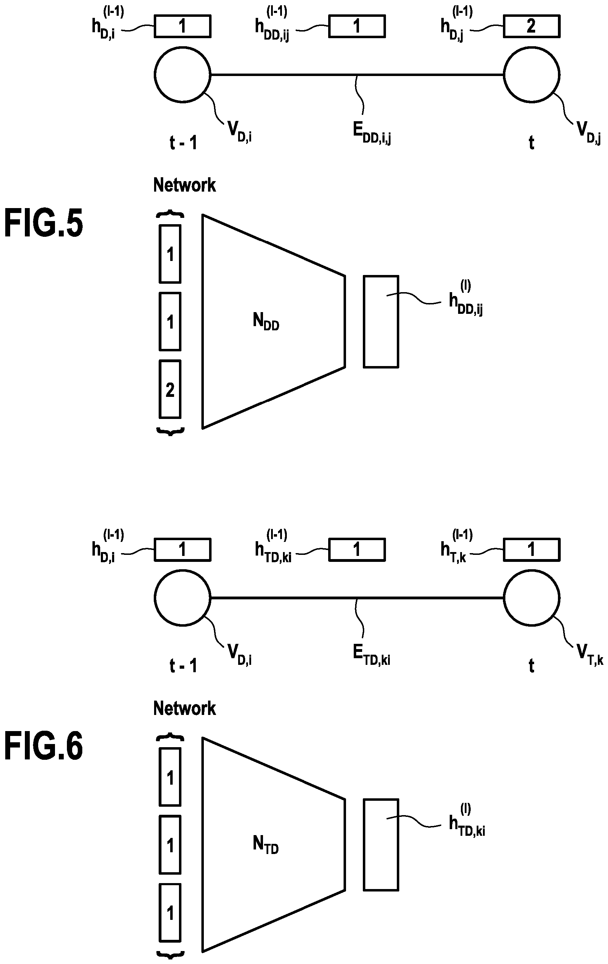

A detection edge $E_{DD,ij}$ at iteration I is updated with a single MLP (multi-layer perceptron) $N_{DD}$ that takes as an input the features $h^{(l-1)}_{D,i}$ and $h^{(l-1)}_{D,j}$ of the two connected detection nodes $V_{D,i}$ and $V_{D,j}$, the current feature of the detection edge $h^{(l-1)}_{DD,ij}$ and (optionally, and not represented on Fig.5) its initial feature $h^{(0)}_{DD,ij}$:

$$h^{(l)}_{DD,ij} = N_{DD} \left( \left[ h^{(l-1)}_{D,i}, h^{(l-1)}_{D,j}, h^{(l-1)}_{DD,ij}, h^{(0)}_{DD,ij} \right] \right)$$

S64 - Track edge update

Track edges are updated in substantially the same manner as the detection edges.

A track edge $E_{TD,ki}$ at iteration I is updated with a single MLP $N_{TD}$ that takes as an input the features $h^{(l-1)}_{T,k}$ and $h^{(l-1)}_{D,i}$ of the two connected nodes, namely the track node $V_{T,k}$ and the connected detection node $V_{D,i}$, the current feature of the track edge $h^{(l-1)}_{TD,ki}$ and (optionally, and not represented on Fig.6) its initial feature $h^{(0)}_{TD,ki}$:

$$h^{(l)}_{TD,ki} = N_{TD} \left( \left[ h^{(l-1)}_{T,k}, h^{(l-1)}_{D,i}, h^{(l-1)}_{TD,ki}, h^{(0)}_{TD,ki} \right] \right)$$

When the detection edges and the track edges have been updated, the detection nodes and track nodes are updated.

S66 - Detection node update

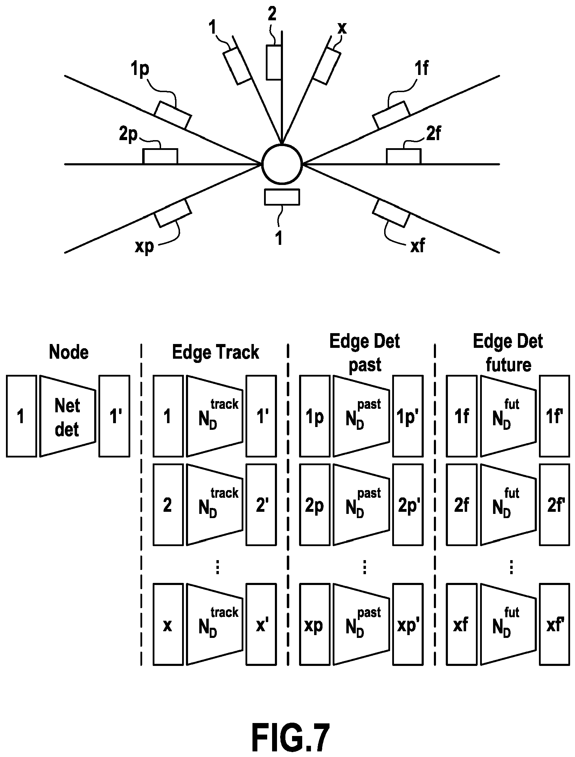

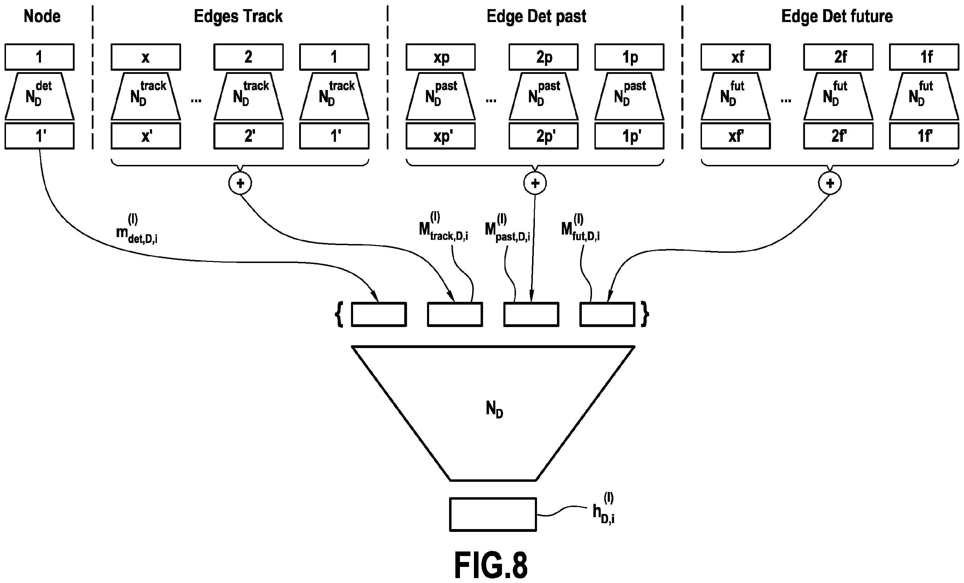

The detection nodes are updated in three steps (Figs.7-8):

S661 - Normally, a detection node is connected to other nodes via track edges (for the considered time point), detection edges connecting the detection node with other detection nodes for past time points, and detection edges connecting the detection node with other detection nodes for future time points.

To reflect these connections, for a considered detection node $V_{D,i}$, to take into account the detection edges $E_{DD,ij}$ and the track edges $E_{TD,ki}$, the following four groups of messages are generated:

$$m^{(l)}_{past,D,ij} = N^{past}_D \left( \left[ h^{(l-1)}_{DD,ij}, h^{(l-1)}_{D,i}, h^{(0)}_{D,i} \right] \right) \mid j \in N^{past}_i$$

$$m^{(l)}_{fut,D,ij} = N^{fut}_D \left( \left[ h^{(l-1)}_{DD,ij}, h^{(l-1)}_{D,i}, h^{(0)}_{D,i} \right] \right) \mid j \in N^{fut}_i$$

$$m^{(l)}_{track,D,ki} = N^{track}_D \left( \left[ h^{(l-1)}_{TD,ki}, h^{(l-1)}_{D,i}, h^{(0)}_{D,i} \right] \right) | j \in N^{track}_i$$

$$m^{(l)}_{det,D,i} = N^{det}_D \left( \left[ h^{(l-1)}_{D,i}, h^{(0)}_{D,i} \right] \right)$$

The first two messages $m_{past}$ and $m_{fut}$ are time-aware detection messages that take into account respectively past and future detection edge information, while the third message $m_{track}$ takes into account the track edge information. (The past and the future in this context are considered relative to the time point of the considered detection node $V_{D,i}$).

The fourth message is a message that takes into account, for a detection node $V_{D,i}$, the information contained by the detection node itself.

The four groups of messages are computed with four different multi-layer perceptrons: $N^{track}_D$, $N^{past}_D$, $N^{fut}_D$ and $N^{Det}_D$.

To prepare a track message for a track edge $EE_{TD,ki}$, the MLP $N^{track}_D$ receives the current values $h^{(l-1)}_{TD,ki}$ of the track edge $EE_{TD,ki}$ which connects the detection node $V_{D,i}$ to the track node $V_{T,k}$, the current value $h^{(l-1)}_{D,i}$ of the detection node $V_{D,i}$, and (optionally) the initial value $h^{(0)}_{D,i}$ of the detection node $V_{D,i}$.

Such a track message is prepared for all track edges $EE_{TD,ki}$ connected to the detection node $V_{D,i}$; the set of indices k of these track edges is noted $N^{track}_i$.

On Fig.7, the notations 1, 2,.. x refer to the different inputs received successively by the MLP $N^{track}$, for the different track edges $EE_{TD,ki}$ to which the detection node $V_{D,i}$ is connected. The notations 1', 2',... x' refer to the different track edge messages $m_{track}$ which are generated for these track edges.

Similarly, to prepare a 'past message' $m_{past}$, for a detection edge $EE_{DD,ij}$ which connects a detection node $V_{D,j}$ at a time point in the past to the considered detection node $V_{D,i}$, the MLP $N^{past}$ receives the current value of the detection edge $EE_{DD,ij}$, the current value $h^{(l-1)}_{D,i}$ of the detection node $V_{D,i}$, and (optionally) the initial value $h^{(0)}_{D,i}$ of the detection node $V_{D,i}$.

Such a past message is prepared for all detection edges $EE_{DD,ij}$ connected to the detection node $V_{D,i}$ from a detection node at a past time point; the set of indices j of these detection nodes is noted $N^{past}_i$. The notations 1p, 2p,.. xp refer to these different inputs for the MLP $N^{past}_D$. The notations 1p', 2p',... xp' refer to the different past detection edge messages $m_{past}$ which are generated for these past detection edges.

Similarly, to prepare a 'future message' $m_{fut}$ for a detection edge $EE_{DD,ij}$ which connects a detection node $V_{D,j}$ at a time point in the future to the considered detection node $V_{D,i}$, the MLP $N^{fut}_D$ receives the current value of the detection edge $EE_{DD,ij}$, the current value $h^{(l-1)}_{D,i}$ of the detection node $V_{D,i}$, and (optionally) the initial value $h^{(0)}_{D,i}$ of the detection node $V_{D,i}$.

Such a future message is prepared for all detection edges $EE_{DD,ij}$ connected to the detection node $V_{D,i}$ from a detection node at a future time point; the set of indices j of these detection nodes is noted $N^{fut}_i$. The notations used for the past messages are used for the future messsages $m_{fut}$, *mutatis mutandis.*

Finally, to prepare the 'detection node message' $m_{det}$, the MLP $N^{det}$ receives the current value of the detection node $V_{D,i}$, and (optionally) the initial value $h^{(0)}_{D,i}$ of the detection node $V_{D,i}$. This input is noted 1, and the output of the MLP $N^{et}$ is noted 1'.

S662 - Then, when the first three groups of messages have been issued by the MLPs, these messages are aggregated separately for the three types of connections ($N^{past}_i$, $N^{fut}_i$, $N^{track}_i$) by a aggregation function $\Phi$ as follows:

$$M^{(l)}_{past,D,i} = \Phi \left( \left\{ m^{(l)}_{past,D,ij}, \ \forall j \in N^{past}_i \right\} \right)$$

$$M^{(l)}_{fut,D,i} = \Phi \left( \left\{ m^{(l)}_{fut,D,ij}, \ \forall j \in N^{fut}_i \right\} \right)$$

$$M^{(l)}_{track,D,i} = \Phi \left( \left\{ m^{(l)}_{track,D,ij}, \ \forall k \in N^{track}_i \right\} \right)$$

The aggregation function $\Phi$ can be a summation, the mean or the maximum of the inputs, or the like. The aggregation function can be symmetric or not. In the present implementation, the summation aggregation function is:

$$\Phi \left( \left\{ m_{ij}^{(l)} , \ \forall j \in N_i \right\} \right) = \sum_{j \in N_i} m_{ij}^{(l)}$$

S663 - Finally, the updated detection node feature is computed by a linear layer, processing the aggregated messages as

$$h_{D,i}^{(l)} = N_D \left( \left[ M_{past,DD,i}^{(l)} , \ M_{fut,DD,i}^{(l)} , \ M_{track,TD,i}^{(l)} , \ m_{det,D,i}^{(l)} \right] \right)$$

S68 - Track nodes update

In order to update a track node $V_{T,k}$, for each detection edge $EE_{TD,ki}$ connected to the track node $V_{T,k}$ a message $m^{(l)}_{det,T,ki}$ is prepared. This message is output by a MLP $N_T^{det}$ on receipt of the input of the updated value $h^{(l)}_{TD,ki}$ of the track edge $EE_{TD,ki}$, the current value $h^{(l-1)}_{T,k}$ of the track node $V_{T,i}$, and optionnally the initial value $h^{(l-1)}_{T,k}$ of the track node $V_{T,i}$.
Such a message is calculated for all the detection edges $EE_{TD,ki}$ connected to the track node $V_{T,k}$; the set of indices i of the detection edges connecting a detection node $V_{D,i}$ to the track node $V_{T,k}$ being noted $N_k$.
In addition, a message $m^{(l)}_{track,T,k}$ is calculated for the track node itself, based on its current value and optionnally its initial value.
These messages are expressed as:

$$m_{det,T,ki}^{(l)} = N_T^{det} \left( \left[ h_{TD,ki}^{(l)} , h_{T,k}^{(l-1)} , h_{T,k}^{(0)} \right] \right)$$

$$m_{track,T,k}^{(l)} = N_T^{track} \left( \left[ h_{T,k}^{(l-1)} , h_{T,k}^{(0)} \right] \right)$$

The messages $m_{det,T,ki}^{(l)}$ related to the detection edges are then accumulated using the aggregation function $\Phi$:

$$M_{det,T,k}^{(l)} = \Phi \left( \left\{ m_{det,T,ki}^{(l)} , \ \forall i \in N_k \right\} \right)$$

Subsequently the message obtained by aggregating the indivdual messages is processed with a single linear layer:

$$h_{T,k}^{(l)} = N_T' \left( M_{det,T,k}^{(l)} , \ m_{track,T,k}^{(l)} \right)$$

The above steps S62, S64, S66 and S68 are performed for L iterations, which allows the graph neural network to have a combination of local and global information at every node, which progressively increases the accuracy of the information it contains.

S70 - Reliability assessment

When all the iteration(s) of the neural message passing step S60 have been performed, a reliability asssessment step S72 is performed, in order to assess the reliability of the different nodes and edges of the graph. On the basis of the reliability values obtained, the nodes and edges of graph G are classified at a step S74 into active/inactive nodes and edges (an active node or edge being a node or edge whose reliability is above a predetermined threshold).

S72 - Nodes and edges reliability assessment

At step S72, four classication neural networks $N^{class}_D$, $N^{class}_T$, $N^{class}_{DD}$ and $N^{class}_{TD}$ are used, to assess the reliability respectivey of the detection nodes, the track nodes, the detection edges and the track edges of the graph.
Each of these classification neural networks is a multi-layer perceptron.
These classification neural networks $N^{class}_D$, $N^{class}_T$, $N^{class}_{DD}$ and $N^{class}_{TD}$ take respectively the final feature of the considered edge or node of the graph G: $h_{D,i}^{(L)}$, $h_{T,k}^{(L)}$, $h_{DD,ij}^{(L)}$ and $h_{TD,ki}^{(L)}$ as an input and, on this basis, output estimated values or labels, each one representing an estimated reliability of the considered node or edge. For each node or edge, the output of each perceptron $N^{class}_D$, $N^{class}_T$, $N^{class}_{DD}$ or $N^{class}_{TD}$ is a label (a number in [0, 1]). These estimated reliabilities are therefore obtained as:

$$y_{D,i} = N_D^{class}(h_{D,i}^{(L)})$$

$$y_{T,k} = N_T^{class}(h_{T,k}^{(L)})$$

$$y_{DD,ij} = N_{DD}^{class}(h_{DD,ij}^{(L)})$$

$$y_{TD,ki} = N_{TD}^{class}(h_{TD,ki}^{(L)})$$

S74 - Active nodes and edges determination

Finally, the reliability estimates yielded by the classification perceptrons are exploited to identify the active detection nodes, track nodes, detection edges and track edges of graph G: The active nodes or edges are the nodes or edges which have a high reliability estimate, and which can therefore be considered to correctly represent an object present in the vicinity of the vehicle.
For instance, it can be determined that the actual detection nodes, the actual detection edges, the actual track nodes, the actual track edges, are those whose reliability estimate is above a threshold, for instance is above 0.5.
The sets of indices of the active detection nodes, active track nodes, active detection edges and active track edges are noted respectively $A_D$, $A_T$, $A_{DD}$ and $A_{TD}$.

S80 - Tracks update

The tracks ($G_{T,n}$) which connect track nodes belonging to the same trajectory of an object are then updated (During the first iteration of the method, this step is skipped).
Updating a track consists in assigning one or more additional detection nodes to the track.
In this context, an assignment for a track is defined as the set of indices of the detection nodes assigned to the track.
For each considered track $G_{T,n}$, updating the track therefore may require finding the detection nodes $V_{D,i}$ of the graph which are the best match for the considered track.
For a track $G_{T,n}$, the set of best matching detection nodes is defined as the set of detection nodes in which:

  1) each detection node is connected to a track node of the track $G_{T,n}$ by an active track edge, and
  2) a quality of the assignment is maximized, the quality of an assignment being herein the number of active detection edges connecting two detection nodes of the set of detection nodes with each other.

To calculate the quality of an assignment, the set of detection node indices of the detection nodes that are connected to a track node $V_{T,k}$ through an active track edge is determined:

$$C_{D,k}^{node} = \{i \in I | ki \in A_{TD}\}$$

By considering all track nodes with indices k, p, q of the track $G_{T,n}$, the set of detection node indices connected to a track is defined as

$$C_{D.n} = C_{D,k}^{node} \cup C_{D,p}^{node} \cup C_{D,q}^{node}$$

Finally, the set of active detection edge indices between these nodes, called the connectivity set for track $G_{T,n}$, is derived as

$$C_{DD.n} = \{ij \in C_{D,n} \times C_{D,n} | ij \in A_{DD}\}$$

The connectivity set $C_{DD,n}$ of the track $G_{T,n}$ is therefore the set of pairs of indices referring to active detection edges $E_{DD,ij}$ that are connected to a detection node connected through an active track edge to one of the track nodes $V_{T,k}$ of the considered track $G_{T,n}$, an active detection edge or track edge being a detection edge or track edge whose reliability is above a predetermined threshold.

Consequently, the quality of an assignment can now be also defined as the number of detection edge indices (referring to detection edges between detection nodes indexed in the assignment) that are in the connectivity set.

Finding an assignment for all the tracks in order to update all the tracks is referred to as the assignment problem.

An approximate solution to this assignment problem can be found using a greedy algorithm. For instance, the following algorithm can be used:

1) create a list with tracks sorted by age, that is, by number of time steps since the creation of the track
2) select the oldest track
3) select the assignment with the highest quality, applying the following rules:

Only assignments using detection nodes that have not been used in a previous assignment are considered;
if multiple assignments of equal quality exist the assignment that contains the least detection nodes;
if still multiple assignments exist select the assignment with highest reliability; and
if still multiple assignment exist select one of these randomly.

4) remove the selected track from the list
5) repeat steps 2 to 4 until the list is empty.

When the assignment having the highest quality is identified for a track at step 3), detection nodes of the assignment which are not yet assigned to the track are assigned to the track, which is therefore updated. The algorithm is executed until all the tracks have been considered, and therefore until all the tracks have been updated.

S90 - Initialization and termination of tracks

New tracks $G_{T,n}$ are created as follows, in two steps, split over two consecutive iterations of the method: First, all active detection nodes $V_{D,i}$ in the current timestep t that have not been used for a track update are labeled as potential track initialization nodes.

Then, in the next iteration of the complete algorithm (at timestep t+1), these labelled detection nodes $V_{D,i}$ are in the second to last frame: A track $G_{T,n}$ is generated for each of the labeled detection nodes which, at the end of the classification step S74 of the next iteration (at timestep t+1), has an active detection edge connected to an unused active detection node.

If multiple active detection edges are active for a labeled detection node, the detection edge that connects to the detection node at the next time step (t+1) with the highest reliability value is chosen to initiate a new track.

In addition, at each iteration of the method, all existing tracks $G_{T,n}$ are reviewed to determine if all of them are still active, that is, if all of them still appear to represent objects around the vehicle.

During this review, if a track $G_{T,n}$ has not been updated for three iterations of the method (i.e., three time steps), it is terminated.

S100 - Track nodes update

For all tracks, at each iteration of the method, if a new detection node is assigned to a track, a track node is generated for the newly assigned detection node.

In addition, in some embodiments, a predictive tracker may be used to create new track nodes.

In this case, at each iteration, a track node may be generated for each track for which no new detection node has been assigned at step S80.

For instance, a Kalman filter may be used to predict the value of a track node for the next time step, based on the values of the track nodes which are already in the track.

In particular, in some embodiments, a separate Kalman filter respectively for each class of objects is used to predict the value of a track node for the next time step, based on the values of the track nodes of the track (For instance, if the objects are classified into pedestrians, cyclists, etc., there may be a Kalman filter for pedestrians, a Kalman filter for cyclists, etc.).

In the present embodiment, the Kalman filter uses a state vector which comprises 11 states: the position (x, y, z) of the detected object; the angle of rotation on ground plane; the object size (l, w, h) which is the size of a bounding box associated for the object; the object velocity (dx, dy, dz); the object angular velocity (w).

The state vector of the Kalman filter may contain fewer or more parameters. As predictive tracker, another state model or a learning based model may be employed (e.g. GRU (a gated-recurrent unit), an LSTM-based network, a transformer, etc.).

S110 - Information output

At step S110, it is assessed whether a stop criterion has been fulfilled.

If the stop criterion has not been fulfilled, a new iteration is launched: the algorithm restarts back at step S10 (or step S30, as the case may be).

If conversely, it is assessed that the stop criterion has been reached, the algorithm jumps to step S120.

Several stop criterions can be used.

For instance, the maximum number L of iterations may be predetermined. In this case, iterations are performed from l=1 to l=L. At the end of the L-th iteration, the criterion is fulfilled, and the algorithm continues at step S120.

The STOP criterion can also be based on variations of values of the nodes and/or edges. In this case for instance, when it is detected that the values of the nodes and/or edges have reached constant or substantially constant values (that is, the norm of their variations is below a threshold), it is considered that the stop criterion has been reached, the algorithm jumps to step S120.

S120 - Information output

At this stage, confirmed object information relative to object(s) is output. For instance, the tracks, and/or values of the base vectors corresponding to the active nodes and edges, are output. Such data constitute valuable information about the objects present around the vehicle.

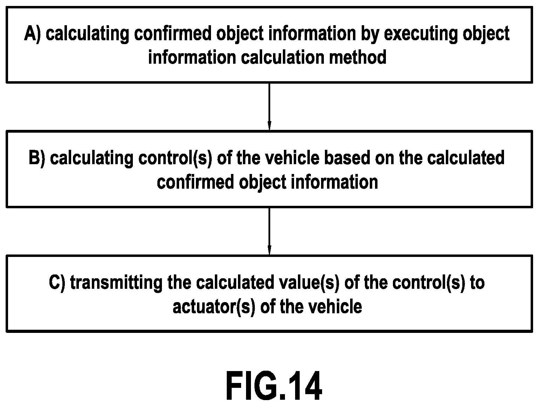

A motion control method for controlling a motion of a vehicle or a robot will now be presented in relation with Figs. 1 and 14.

The method comprises performing iteratively the following tasks:

A) calculating confirmed object information by an object information calculation method according to the present disclosure. The confirmed object information includes in particular, preferably, the tracks of all the mobile objects detected around the vehicle or robot.

B) calculating control(s) of the vehicle or robot, based on the calculated object information. In the present embodiment for instance, the AMCS system calculates all the controls necessary for driving the vehicle 10 in fully autonomous mode. These controls include steering controls, acceleration controls and braking controls.

C) transmitting the calculated value(s) of the control(s) to actuator(s) of the vehicle (10) or robot. In the present embodiment for instance, the steering controls, acceleration controls and braking controls calculated by the AMCS are transmitted to the set of actuators 130. For instance, the steering controls are transmitted to the steering unit 130, the braking controls are transmitted to the braking unit, etc.

SENSOR REDUNDANCY - DATA FUSION

In some implementations of the method, redundant detection modalities are used to capture or obtain information about the objects located around the vehicle.

The detection modalities can be sensors (cameras, lidars), or databases from which information relative to the surroundings of the system can be retrieved.

For instance, this situation may happen when objects detected by sensor(s) of the vehicle are also described in data which can be retrieved from a database such as a GIS.

Such situation may result in multiple detections of the surrounding objects.

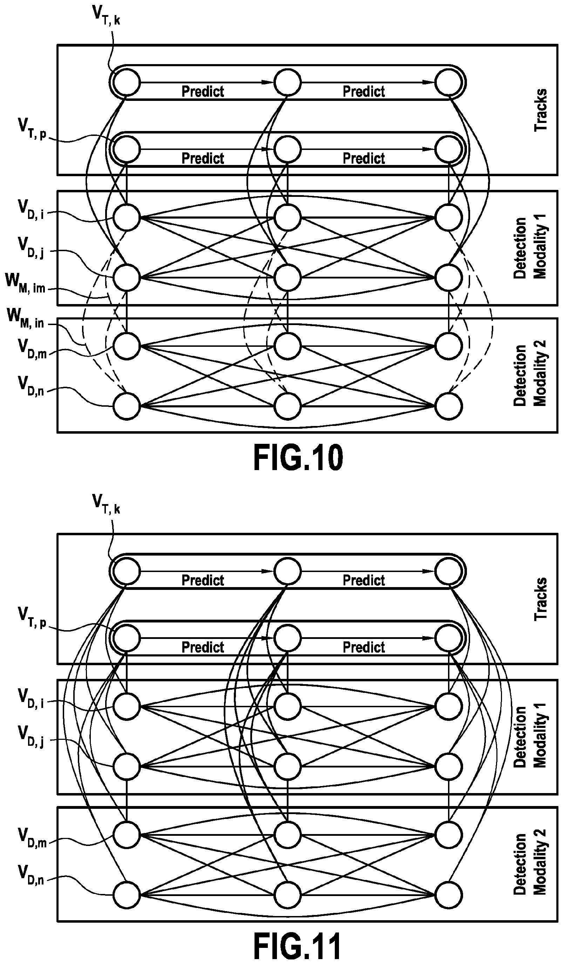

In order to take advantage of this situation, the graph may be generated with several classes of detection nodes, that is, one class of detection node per type of sensor. Schematic representations of a part of such a graph are shown on Figs.10-12, in cases where two types of sensors, that is, two detection modalities (for instance, cameras and lidars) are used to capture information on the objects surrounding a vehicle: Consequently, two categories of detection nodes are created (for instance, $V_{D,i}$ and $V_{D,j}$, for the first detection modality, and $V_{D,m}$ and $V_{D,n}$, for the second detection modality, at time point t-2 on the left of Fig.10. The other detection nodes represented on this figure are not referenced).

The detection edges in these cases are only generated between detection nodes of the same category.

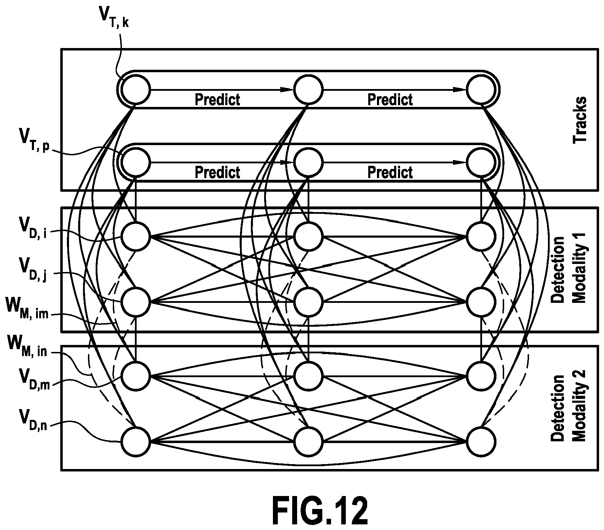

In some cases, for instance in the cases shown on Figs.10 and 12, a new type of edges is generated in the graph: Multi-modal edges. Such multi-modal edges, for instance at time point t-2, multi-modal edges $W_{M,im}$ and $W_{M,in}$, connect a detection node of the first modality and a detection node of the second modality, at the same time point.

However, even when detections derived from two detection modalities are acquired, the method of the present disclosure can be implemented without using multi-modal edges. For instance, as shown in the embodiment of Fig.11, the detection nodes for each detection modality can be connected to the track nodes by track edges; however, no multi-modal edges are created to connect detection nodes for the first detection modality with detection nodes for the second modality.

It may also be possible to create a graph in which either all detection nodes (for all detection modalities) can be connected to the track nodes by track edges (Fig.12). In other embodiments on the other hand, detection nodes only for selected detection modalities can be connected to the track nodes by track edges; conversely, the remaining detection nodes are not connected to the track nodes, but are connected to other detection nodes at the same time point by multi-modal edges (Fig.10).

Apart from the creation of the graph, which is specific due to the above characteristics, the method of the present disclosure is executed according to the steps presented before. Since the graph comprises additional types of detection nodes, detection edges and track edges, all steps of the method are executed so as to take into account these additional types of nodes and edges. For instance, at step S20 additional embedding networks are used to embed the features for the additional object-related data received from the additional modality(ies), etc.

The reliability assessment at step S70 in particular may take into account the additional information related to the different detection modalities.

For instance, at step S70 the reliability of multi-modal edges connecting detection nodes from different detection modalities can be assessed.

If a multi-modal edge connecting two detection nodes from different modalities is classified as reliable, it can be concluded that the two detection nodes most likely represent the same object and are reliable detections (not false detections). For this reason, when redundant sensors, e.g. additional detection modalities, are used, the present method makes it possible for each detected object to select the information considered the most reliable among the different information output by the different sensors. For instance, cameras output images which are a reliable basis to perform matching of objects at different time points (e.g. based on appearance features) while the outputs of lidars are a reliable basis to determine the positions, shapes and orientations of detected objects.


TRAINING

Advantageously, most functions executed as part of the object information calculation method described above (with the exception of the function of updating the tracks) are differentiable, and consequently can be performed by a model trained by back-propagation. This model corresponds therefore the whole OICS system, except the functional unit performing the track updates.

In the present embodiment, this model is trained in two steps: An initial off-line training, followed by a semi-online training.


Initial off-line training

In order to carry out the initial training of the model, a first training dataset is prepared.

This dataset comprises a large number of detections (for instance detections calculated in advance, based on raw data output by the sensors of the vehicle over a time period), as well as corresponding tracks for the objects identified in the detections. The tracks are generally generated by a human operator and constitute the ground truth of the dataset.

Based on the tracks and detections, the graph is created: Its nodes and edges are determined.

In addition, based on the tracks, reliability labels are attributed to the track and detection edges and to the detection nodes, based on the following rules:

A track edge has a high reliability (i.e., a reliability equal to 1) if it connects a track node to a detection node that corresponds to an underlying track.

A detection node has a high reliability if it belongs to a track.

A detection edge has a high reliability if it connects two detection nodes that belong to the same track.

If an edge or node does not have a high reliability, it is considered it has a low reliability (i.e., 0).

The ground truth used for the initial training therefore further includes the reliability labels of the nodes and edges.

Augmentations can be further added in the dataset, to simulate missing detections, track initialisation, track termination or noise on the detections.

Based on the first dataset, the model is trained: The embedding network(s), the graph neural network(s) ($N_D$, $N_{DD}$, $N_{TD}$) and the classification network(s) (except the track node reliability assessment network $N^{class}_T$) are jointly trained end-to-end.

A cross-entropy or a focal loss can be used as a loss function for this training. In addition, in the loss function, higher weights are allotted edges and nodes which have a high reliability, to compensate for imbalance.

During training, classification may be performed not only on the values $h^{(L)}$ attained at the last iteration (i=L), but also for the values of the nodes and edges attained at some of the preceding iterations of the method: This distributes indeed the gradient information more evenly throughout the model, and helps reducing the risk of vanishing gradients.

Semi-online training

After this initial training carried out with the offline data of the dataset, the model is trained in a semi-online setting, in two steps: 1) First, a second dataset is generated. This second dataset does not include the ground truth tracks of the initial dataset.

Instead, new tracks are generated by the trained network(s).

These new tracks are then matched to the ground truth tracks based on a distance metrics. As a result, a label is obtained for each new track, which indicates a correspondance between the track and the closest initial ground truth track. In this operation, only one new track is matched with a ground truth track of the initial dataset. 2) Based on the detections of the first dataset and the new tracks, a new graph is created: Its nodes and edges are determined.

Once again, based on the new tracks, reliability labels are calculated for the track and detection edges and for the detection nodes, in the same way as during the initial training.

Moreover, based on the tracks, reliability labels are now also calculated for the track nodes: A track node has a high reliability (i.e., 1) if it corresponds to a track that has been matched to an initial ground truth track.

As for the initial training, the ground truth used for the initial training includes the reliability labels of the nodes and edges.

The embedding network(s), the graph neural network(s) ($N_T$, $N_D$, $N_{DD}$, $N_{TD}$) and the classification network(s) are then again jointly trained end-to-end.

Advantageously, the semi-online training (that is, the two steps 1) and 2) described above) can be performed iteratively.

Thanks to the initial off-line training, the model which has been submitted to the initial training can generate tracks which usually exhibit a data distribution already fairly close to reality.

Moreover, thanks to the subsequent iterations of the semi-online training, the tracks are used to generate successive new datasets, which contains the same set of detections as before, but with successively updated tracks. By successively retraining the model on this semi-online data, together with data augmentations, considerable performance gains can be accomplished.

Note, in the embodiments in which different neural networks are used for the different iterations of the information propagation step, for the end-to-end training, gradients are propagated through all of these networks (both for the initial training and the semi-online training).

Besides, the predictive tracker used at step S70 to update the tracks is trained or tuned separately, based on experimental data. For instance, the values of the covariance matrices of the Kalman filter are determined separately, based on experimental data.

Those skilled in the art will recognize that the present invention may be implemented in a variety of forms other than the specific embodiments described and contemplated herein. Accordingly, departure in form and detail may be made without departing from the scope of the present invention as described in the appended claims.

**Claims**

1. A computer-implemented object information calculation method for obtaining confirmed object information relative to object(s) on the basis of a plurality of detections (DET) of the object(s),

   a detection of an object (P) being a datum comprising a position (pi) of the object (P) at a time point;
   a track (Gn) being a datum including one or more detection(s),
   a track node (VT,k) being a datum calculated from a track at a time point;
   a detection node ($V_{E,i}$) being a datum calculated from a detection;
   a track edge ($E_{TD,mk}$) being a datum associating, at a time point, a track node to a detection node; and
   a detection edge being a datum ($E_{DD,ij}$) associating two detection nodes at two different time points;
   a graph (G) being a data structure comprising a plurality of detection nodes ($V_{D,i}$), a plurality of track nodes ($V_{T,k}$), a plurality of detection edges ($E_{DD,ij}$) and a plurality of track edges ($E_{TD,km}$),
   the method comprising performing iteratively the following steps S30-S110:

   S30) acquiring at least detection(s) (DET) of object(s) and, based on the received detection(s) and, when track(s) have been calculated or acquired, on the track(s), preparing base vectors (x);
   S40) based on the base vectors ($x_{D,i}$, $x_{T,k}$, $x_{DD,ij}$, $x_{TD,ki}$), determining embedded features ($e_{D,i}$, $e_{T,m}$, $e_{DD,ij}$, $e_{TD,mk}$) of the object(s) for nodes and edges of the graph (G);
   S50) determining initial values ($h^{(0)}_{D,i}$, $h^{(0)}_{T,m}$, $h^{(0)}_{DD,ij}$, $h^{(0)}_{TD,mk}$) of the nodes and edges of the graph (G) for which embedded features have been determined, based on the embedded features ($e_{D,i}$, $e_{T,m}$, $e_{DD,ij}$, $2_{TD,mk}$);
   S60) in response to receipt of the initial values ($h^{(0)}_{D,i}$, $h^{(0)}_{T,m}$, $h^{(0)}_{DD,ij}$, $h^{(0)}_{TD,mk}$), updating one or more time (i=1...L) at least track edge(s) ($h^{(s)}_{TD,mk}$) of the graph (G);
   S70) based on updated values ($h^{(L)}_{D,i}$, $h^{(L)}_{T,m}$, $h^{(L)}_{DD,ij}$, $h^{(L)}_{TD,mk}$) of the detection nodes, the track nodes, the detection edges and/or the track edges of the graph (G), assessing a reliability of at least one of the edges and/or nodes,
   S80) updating track(s), wherein a track is updated by assigning a detection node to the track;
   S90) generating new track(s), a new track being generated based on at least one detection or detection node;
   S100) updating track node(s), at least by generating new track node(s) from track(s);
   S110) assessing whether a stop criterion has been fulfilled; and,
   when it has been assessed at step S110 that the stop criterion has been fulfilled, performing step S120:
   S120) outputting object information relative to at least one of the object(s), based on at least one edge or node or track.

2. The object information calculation method according to claim 1, wherein at step S100, updating track node(s) comprises generating new track nodes with predictive tracker(s).

3. The object information calculation method according to claim 2, wherein a predictive tracker is defined for each track, and/or the predictive tracker(s) include a Kalman filter and/or include neural network(s) comprising one or more LSTM cells.

4. The object information calculation method according to any one of claims 1 to 3, wherein at step S80, updating a track comprises identifying a connectivity set of the track, the connectivity set ($C_{DD,n}$) of the track ($G_{T,n}$) being a set of pairs (i,j) of indices referring to active detection edges ($E_{DD,ij}$) that are connected to a detection node connected through an active track edge to one of the track nodes ($V_{T,k}$) of the considered track ($G_{T,n}$), an active detection edge or track edge being a detection edge or track edge whose reliability is above a predetermined threshold.

5. The object information calculation method according to any one of claims 1 to 4, wherein at step S60 updating at least the track edges ($h^{(s)}_{TD,mk}$) is performed using a message passing algorithm, in which updated nodes are updated based on adjacent edges, and updated edges are updated based on nodes that they connect.

6. The object information calculation method according to any one of claims 1 to 5, wherein at step S60 updating at least the track edges ($h^{(s)}_{TD,mk}$) is performed using at least one neural network.

7. The object information calculation method according to any one of claims 1 to 6, wherein at step S50, the initial features ($h^{(0)}_{D,i}$, $h^{(0)}_{T,m}$, $h^{(0)}_{DD,ij}$, $h^{(0)}_{TD,mk}$) are further determined based on values ($h^{(L)}_{D,i}$, $h^{(L)}_{T,m}$, $h^{(L)}_{DD,ij}$, $h^{(L)}_{TD,mk}$) of nodes and edges of the graph (G) calculated during a previous execution of the method.

8. The object information calculation method according to any one of claims 1 to 7, wherein the detection nodes comprise at least two categories of detection nodes, calculated from detections obtained with at least two different types of sensors.

9. The object information calculation method according to claim 8, wherein step S80 comprises assigning at least two detection nodes pertaining to at least two different categories to one track node.

10. The object information calculation method according to any one of claims 1 to 9, wherein
the detection nodes comprise at least two categories of detection nodes, calculated from detections acquired with at least two different types of sensors;
the graph (G) further comprises multi-modal edges, a multi-modal edge being a datum $(W_{M,im}, W_{M,in})$ associating two detection nodes $(V_{D,i}, V_{D,m}; V_{D,i}, V_{D,n})$ from different categories;
during the reliability assessment step S70, a reliability of multi-modal edge(s) is assessed; and
the information output at step S120 is determined based on an assessed reliability of multi-modal edge(s).

11. The object information calculation method according to any one of claims 1 to 10, wherein at step S40, the embedded features $(e_{D,i}, e_{T,m}, e_{DD,ij}, e_{TD,mk})$ of the detected object(s) are determined using at least one embedding neural network $(EN_D, EN_T, EN_{DD}, EN_{TD})$ or a linear transformation.

12. The object information calculation method according to any one of claims 1 to 11, wherein at step S30, track(s) are acquired.

13. The object information calculation method according to any one of claims 1 to 12, wherein at step S80, a track is updated by assigning a considered detection node to the track based at least on the reliability of a track edge connecting the considered detection node to a track node calculated from the track.

14. A computer-implemented motion control method for controlling a motion of a vehicle or a robot, the method comprising iteratively:

   A) calculating object information by an object information calculation method according to any one of claims 1 to 13;
   B) calculating control(s) of the vehicle or the robot, based on the calculated object information; and
   C) transmitting the calculated value(s) of the control(s) to actuator(s) of the vehicle (10) or robot.

15. One or more computer program(s) comprising instructions which, when the instructions are executed by a computer, cause the computer to carry out the steps of an object information calculation method according to any one of claims 1 to 13.

16. A non-transitory computer readable medium, having the one or more computer program(s) according to claim 15 stored thereon.

17. An object information calculation system (OICS) for obtaining confirmed object information relative to object(s) on the basis of a plurality of detections (DET) of the object(s); the object information calculation system (OICS) comprising one or more processors and a computer-readable medium;
the computer-readable medium comprising computer instructions stored therein, wherein the instructions, when executed by the one or more processors, cause the one or more processors to carry out the steps of an object information calculation method according to any one of claims 1 to 13.

18. An advanced motion control system (AMCS), comprising one or more processors and a computer-readable medium;
the computer-readable medium comprising computer instructions stored therein, wherein the instructions, when executed by the one or more processors, cause the one or more processors to carry out the steps of the motion method according to claim 14.

19. A vehicle (10) or robot comprising an object information calculation system (OICS) according to claim 17 or an advanced motion control system (AMCS) according to claim 18.

**FIG.1**

**FIG.2**

**FIG.3**

Tracks and track nodes update/ generation

$N_D^{class}$

$N_T^{class}$

$N_{DD}^{class}$

$N_{TD}^{class}$

$N_D$

$N_T$

$N_{DD}$

$N_{TD}$

$h_{D,i}^{(0)}$

$h_{D,i}^{(l)}$

$h_{T,k}^{(0)}$

$h_{T,k}^{(l)}$

$h_{DD,ij}^{(0)}$

$h_{DD,ij}^{(l)}$

$h_{TD,ik}^{(0)}$

$h_{TD,ik}^{(l)}$

$IN_D$

$IN_T$

$IN_{DD}$

$IN_{TD}$

$e_{D,i}$

$e_{T,k}$

$e_{DD,ij}$

$e_{TD,ik}$

$EN_D$

$EN_T$

$EN_{DD}$

$EN_{TD}$

$x_{D,i}$

$x_{T,k}$

$x_{DD,ij}$

$x_{TD,ik}$

$G_N$

DET

Base vectors calculation

Detections calculation

cameras RDC

lidars RDL

radars RDR

maps RDM

OICS

# FIG.4

FIG.5

FIG.6

# FIG.7

FIG.8

EP 4 050 510 A1

**Node** | **Edges Track**

| 1 |

$N_T^{track}$

| 1' |

| x |

$N_T^{det}$

| x' |

...

| 2 |

$N_T^{det}$

| 2' |

| 1 |

$N_T^{det}$

| 1' |

$\oplus$

$m_{track,T,k}^{(l)}$

$M_{det,T,k}^{(l)}$

| 1' | | |

$N'_T$

$h_{T,k}^{(l)}$

# FIG.9

$V_{T, k}$

Predict → Predict →

Tracks

$V_{T, p}$

Predict Predict →

$V_{D, i}$

Detection Modality 1

$V_{D, j}$

$W_{M, im}$

$W_{M, in}$

$V_{D, m}$

Detection Modality 2

$V_{D, n}$

**FIG.10**

$V_{T, k}$

Predict → Predict →

Tracks

$V_{T, p}$

Predict Predict →

$V_{D, i}$

Detection Modality 1

$V_{D, j}$

$V_{D, m}$

Detection Modality 2

$V_{D, n}$

**FIG.11**

**FIG.12**

# FIG.13

S10 — Reception of raw data from one or more detection modalities

S20 — Detections calculation

S30 — Input data preparation

S40 — Embedding of features of the detected object(s) for the nodes and edges of the graph G, using the embedding neural networks $EN_D$, $EN_T$, $EN_{DD}$, $EN_{TD}$

S50 — Determination of initial values $h_{D,i}^{(0)}$, $h_{T,k}^{(0)}$, $h_{DD,ij}^{(0)}$, $h_{TD,ki}^{(0)}$ of nodes and edges of graph G, using the initialization neural networks $IN_D$, $IN_T$, $IN_{DD}$, $IN_{TD}$

S60 — Information propagation (Neural message passing)

S62 — Update of the track edges

S64 — Update of the detection edges

S66 — Update of the detection nodes

S68 — Update of the track nodes

S70 — Reliability assessment and classification

S72 — Assessing reliability of edges and/or nodes

S74 — Determining active nodes and edges (sets $A_D$, $A_T$, $A_{DD}$, $A_{TD}$)

S80 — Tracks update

S90 — New track(s) generation

S100 — Track nodes update

S110 — Stop criterion evaluation

S120 — Output of object information

A) calculating confirmed object information by executing object
information calculation method

B) calculating control(s) of the vehicle based on the calculated
confirmed object information

C) transmitting the calculated value(s) of the control(s) to
actuator(s) of the vehicle

FIG.14

Europäisches
Patentamt

European
Patent Office

Office européen
des brevets

**EUROPEAN SEARCH REPORT**

Application Number

EP 21 15 9415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | BRASO GUILLEM ET AL: "Learning a Neural Solver for Multiple Object Tracking", 2020 IEEE/CVF CONFERENCE ON COMPUTER VISION AND PATTERN RECOGNITION (CVPR), IEEE, 13 June 2020 (2020-06-13), pages 6246-6256, XP033804553, DOI: 10.1109/CVPR42600.2020.00628 [retrieved on 2020-08-03] * the whole document * | 1-19 | INV. G06K9/00 G06K9/62 G06T7/20 |
| X | AKSHAY RANGESH ET AL: "TrackMPNN: A Message Passing Graph Neural Architecture for Multi-Object Tracking", ARXIV.ORG, CORNELL UNIVERSITY LIBRARY, 201 OLIN LIBRARY CORNELL UNIVERSITY ITHACA, NY 14853, 11 January 2021 (2021-01-11), XP081856897, * sections 3-4 * | 1-19 | |
| X | IOANNIS PAPAKIS ET AL: "GCNNMatch: Graph Convolutional Neural Networks for Multi-Object Tracking via Sinkhorn Normalization", ARXIV.ORG, CORNELL UNIVERSITY LIBRARY, 201 OLIN LIBRARY CORNELL UNIVERSITY ITHACA, NY 14853, 30 September 2020 (2020-09-30), XP081775086, * section 3 * | 1-19 | TECHNICAL FIELDS SEARCHED (IPC) G06K G06T |

The present search report has been drawn up for all claims

3

| Place of search | Date of completion of the search | Examiner |
|---|---|---|
| The Hague | 8 August 2021 | Borges, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 050 510 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Learning a Neural Solver for Multiple Object Tracking. **GUILLEM BRASO ; LAURA LEAL-TAIXE.** 2020 IEEE/CVF Conference on Computer Vision and Pattern Recognition (CVPR). IEEE, June 2020, 6246-6256